# EUROPÄISCHE PATENTANMELDUNG

(11) **EP 3 649 851 A1**
(43) Veröffentlichungstag der Anmeldung: **13.05.2020**
(21) Anmeldenummer: 19208039.8
(22) Anmeldetag: 08.11.2019
(51) Int. Cl.: A01K 5/00, B01F 7/24

(54) **VORRICHTUNG ZUM MISCHEN UND VERTEILEN VON SCHÜTTGÜTERN**

(30) Priorität: 09.11.2018 DE 102018128118
(71) Anmelder: Bernard van Lengerich Maschinenfabrik GmbH & Co. KG, 48488 Emsbüren (DE)
(72) Erfinder: Postmeier, Markus, 49479 Ibbenbüren (DE); Stephan, Christian, 48496 Hopsten (DE)
(74) Vertreter: Pott, Ulrich

(57) **Zusammenfassung**

Die Erfindung bezieht sich auf eine Vorrichtung 10 zum Mischen und Verteilen von Schüttgütern, insbesondere von kurz- und langfaserigen Erntegut mit einem Behälter zur Aufnahme von Schüttgut, der zumindest ein in eine Rotationsbewegung versetzbares Förder- und Mischelement 15 aufweist, welches von einem Zapfwellenantrieb eines landwirtschaftlichen Schleppers koppelbaren Antriebstrang A motorisch antreibbar ist. Um diese Vorrichtung für verschiedene Einsätze zu optimieren, ist vorgesehen, dass der Antriebstrang in im Wesentlichen koaxialer Anordnung eine einen elektromotorischen Antrieb durchsetzenden Antrieb 3 durchsetzende Antriebswelle 9, eine mit der Antriebswelle 9 verbindbare Gelenkwelle 1 zur Kopplung mit dem Zapfwellenantrieb des landwirtschaftlichen Schleppers und eine mit dem Förder- und Mischelement 15 koppelbare Verbindungswelle 5 aufweist, wobei zwischen der Gelenkwelle 1 und der Antriebswelle 9 eine schaltbare Kupplung vorgesehen ist

## Beschreibung

Die Erfindung bezieht sich auf eine Vorrichtung zum Mischen und Verteilen von Schüttgütern, insbesondere von kurz- und langfaserigem Silagegut mit einem Behälter zur Aufnahme von Schüttgut, der zumindest einen in eine Rotationsbewegung versetzbares Förder- und Mischelement aufweist, welches von einem mit einem Zapfwellenantrieb eines landwirtschaftlichen Schleppers koppelbaren Antriebstrang motorisch antreibbar ist.

Vorrichtungen zum Mischen und Verteilen von Schüttgütern der vorgenannten Art sind allgemein bekannt. So sind sie beispielsweise in einer Ausgestaltung als Futtermischwagen bekannt, bei denen innerhalb eines Behälters eine stehende Welle als ein in eine Rotationsbewegung versetzbares Förder- und Mischelement mit im Wesentlichen senkrechter Längsachse angeordnet ist. Das faserige Silagegut wird von oben in den Behälter eingegeben, von dem Misch- und Förderelement erfasst, bearbeitet und dann einer Austragöffnung zugeführt, der in aller Regel ein Förderband zum Ausbringen des bearbeiteten Silagegutes in einen Futtergang nachgeordnet ist. Derartige Vorrichtungen werden für das Ausbringen von Futter in einen Futtergang üblicherweise von einem landwirtschaftlichen Schlepper gezogen, wobei das Förder- und Mischelement von der Schlepperzapfwelle über den Antriebsstrang motorisch angetrieben ist.

Derartige Vorrichtungen sind jedoch nicht nur im mobilen Einsatz zu nutzen, sondern sollen vielfach auch stationär aufgestellt sein, um im stationären Einsatz zu arbeiten. Dafür ist jedoch der Antriebsstrang zum Antreiben des Förder- und Mischelementes bei herkömmlichen Vorrichtungen nur bedingt tauglich, da es wirtschaftlich nicht vertretbar ist, für einen derartigen stationären Einsatz dauerhaft einen landwirtschaftlichen Schlepper mit Schlepperzapfwelle als Antriebsorgan zur Verfügung zu stellen.

Es ist Aufgabe der vorliegenden Erfindung, eine Vorrichtung der eingangs genannten Art dahingehend weiterzubilden, dass diese Vorrichtung sowohl für den mobilen als auch für den stationären Einsatz ausgerüstet ist und mit einfachem Rüstaufwand sowohl für den mobilen als auch für den stationären Betrieb funktionsfähig einsatzbereit ist.

Zur Lösung dieser Aufgabe zeichnet sich die Vorrichtung der eingangs genannten Art dadurch aus, dass der Antriebsstrang in im Wesentlichen koaxialer Anordnung eine einen elektromotorischen Antrieb durchsetzende Antriebswelle aufweist, dass eine mit der Antriebswelle verbindbare Gelenkwelle zur Kopplung mit dem Zapfwellenantrieb des landwirtschaftlichen Schleppers und eine mit dem Förder- und Mischelement koppelbare Verbindungswelle vorgesehen ist, wobei zwischen der Gelenkwelle und der Antriebswelle eine schaltbare Kupplung vorgesehen ist.

Damit ist eine Vorrichtung zur Verfügung gestellt, bei der der Antriebsstrang zumindest eine dreiteilige Baugruppe aufweist, bestehend aus der den Elektromotor vorzugsweise mittig durchsetzende Antriebswelle sowie der einenends mit der Antriebswelle verbindbaren Gelenkwelle, die anderenends mit dem Zapfwellenantrieb des Schleppers oder einer sonstigen Antriebswelle für den mobilen Einsatz verbunden werden kann, und einer zentralen Verbindungswelle zu dem Förder- und Mischelement, die ihrerseits von der Antriebswelle angetrieben sein kann.

Damit ist eine Vorrichtung geschaffen, bei der über die schaltbare Kupplung die Gelenkwelle von der Antriebswelle abgekuppelt werden kann, so dass in diesem Fall der abgekuppelten Gelenkwelle der Antrieb des Förder- und Mischelementes allein durch den elektromotorischen Antrieb erfolgen kann. Dieser elektromotorischer Antrieb kann von einer Stromversorgung mit der elektrischen Antriebsenergie versorgt werden, so dass dieser autark den Antrieb der Förder- und Mischelemente übernehmen kann, ohne dass ein Antrieb über einen landwirtschaftlichen Schlepper erfolgen muss. Für den mobilen Einsatz der Vorrichtung kann die Gelenkwelle mit dem Zapfwellenantrieb eines landwirtschaftlichen Schleppers verbunden werden, so dass über die schaltbare Kupplung dann die Gelenkwelle durch den Zapfwellenantrieb angetrieben wird, wobei die Gelenkwelle die Antriebswelle und über diese die Verbindungswelle und damit die Förder- und Mischelemente antreibt, wobei der elektromotorische Antrieb dann ausgeschaltet bleibt. Dies ist alles mit baulich einfachen Mitteln zu verziehen, da die Antriebswelle zentral den elektromotorischen Antrieb, also den Elektromotor durchsetzt. Der Antriebsstrang ist insgesamt im Wesentlichen koaxial ausgerichtet, also die Gelenkwelle, die Antriebswelle und die Verbindungswelle.

Die Verbindungswelle weist bevorzugtermaßen an ihren beiden Enden eine doppelkardanische Kupplung auf. Darüber hinaus kann zwischen der Antriebswelle und der kardanischen Kupplung ein Planetengetriebe vorgesehen sein. Der Elektromotor ist vorzugsweise ein vierpoliger oder sechspoliger Drehstrommotor, der für eine Anschlussspannung von 230/400 Volt oder 460/690 Volt ausgelegt ist. Dieser kann mit einer Motorsteuerung ausgerüstet sein und vorzugsweise, aber auch beispielsweise eine Antriebsdrehzahl von ca. 1.000 Umdrehungen pro Minute aufweisen. Bevorzugterweise hat dieser Elektromotor auch noch einen Frequenzumrichter, der in seiner Drehzahl über einen Drehzahlbereich von 50 bis 180 Hertz geregelt ist. Dieses ist ein sehr weiter Drehzahlbereich. Aufgrund dieser Regelung ist es möglich, auf unterschiedliche Mischungskomponenten des Erntegutes flexibel zu reagieren und auch wechselnde Mischungsverhältnisse zu berücksichtigen. Im fast entleerten Zustand der Vorrichtung kann der elektromotorische Antrieb kurzzeitig auf eine hohe Drehzahl beschleunigt werden. Damit können die Misch- und Förderelemente von Erntegutresten befreit werden. Dies vermindert das Risiko einer Kontamination von Erntegutresten mit einer nachfolgenden Erntegutmischration.

Die Absicherung der Vorrichtung kann im stationären Betrieb über eine elektrische Motorstrombegrenzung erfolgen. Diese kann Bestandteil des vorzusehenden Frequenzumrichters sein und damit Bestandteil einer elektrischen Motorsteuerung. Im Falle der Überschreitung eines voreingestellten Grenzwertes kann der motorische Antrieb ausgeschaltet werden.

Die Vorrichtung stellt mithin eine Kombination aus einer mobilen und einer stationären Vorrichtung dar (Hybridvorrichtung) und kann sowohl mittels des angekuppelten landwirtschaftlichen Schleppers über die Schlepperzapfwelle oder wahlweise über den elektromotorischen Antrieb betrieben werden. Ein gleichzeitiger Betrieb durch den landwirtschaftlichen Schlepper als auch durch den elektromotorischen Antrieb ist dabei nicht vorgesehen.

Zusätzlich ist es möglich, die Vorrichtung über eine Drehmomentsicherung vor einer zu hohen Belastung zu schützen. Dazu kann eine Scher- bzw. Brechbolzenvorrichtung als mechanische Sicherung zwischen der Gelenkwelle und der nachgeordneten schaltbaren Kupplung vorgesehen sein. Im Falle einer Überlastung wird diese Drehmomentübertragung durch den Bruch des Scherbolzens unterbrochen.

Weitere vorteilhafte Ausgestaltungen ergeben sich aus weiteren Unteransprüche, der nachfolgenden Beschreibung und der Zeichnung. In der Zeichnung zeigen:
- Fig. 1:: In einer schematischen Seitendarstellung ein Ausführungsbeispiel einer Vorrichtung nach der Erfindung in Gestalt eines Futtermischwagens mit zwei senkrecht innerhalb der Vorrichtung angeordneten Förder- und Mischelementen in Gestalt von Fördermischschnecken;
- Fig. 2:: eine Draufsicht auf das Ausführungsbeispiel nach Fig. 1;

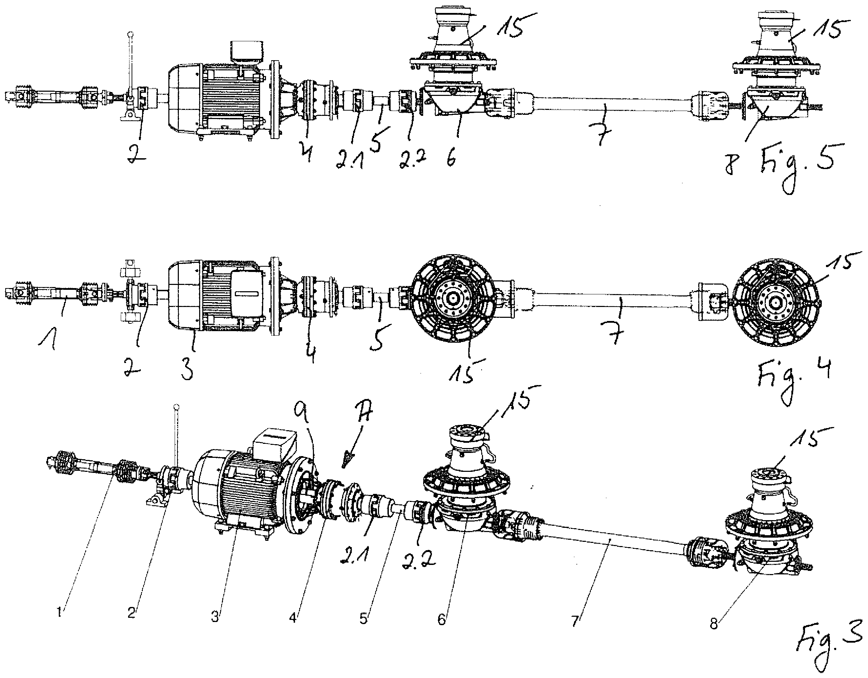

- Fig. 3:: perspektivisch eine Darstellung eines Ausführungsbeispiels eines Antriebsstranges mit elektromotorischen Antrieb für die beiden Förder- und Mischschnecken nach dem Ausführungsbeispiel nach den Fig. 1 und 2;
- Fig. 4:: eine Draufsicht auf das Ausführungsbeispiel nach Fig. 3, und
- Fig. 5:: eine Seitenansicht auf das Ausführungsbeispiel nach Fig. 3.

In der Zeichnung sind allgemein übereinstimmende Teile mit übereinstimmenden Bezugsziffern versehen.

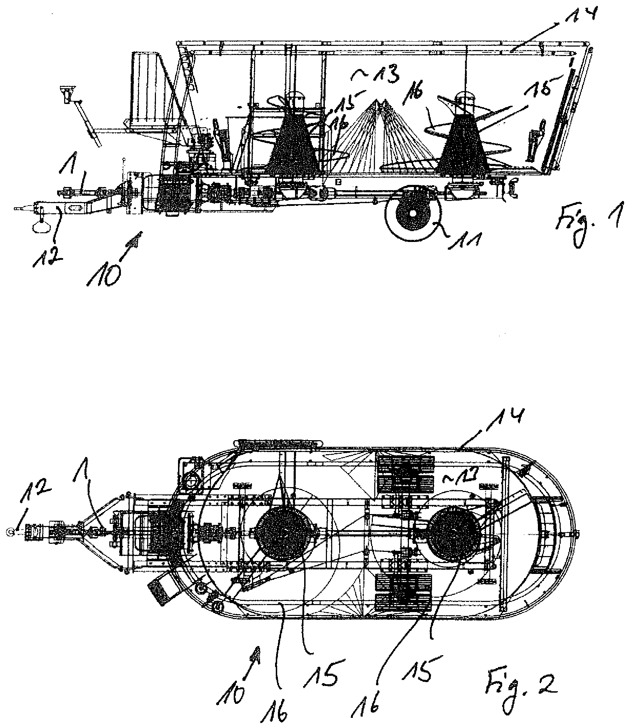

Allgemein ist in Fig. 1 ein Futtermischwagen 10 als Vorrichtung zum Mischen und Verteilen von Schüttgütern gezeigt. Dieser ist über Räder 11 auf den Erdboden abzustützen, hat eine Deichsel 12 sowie einen von Seitenwänden 14 umgrenzten Innenraum, in dem Förder- und Mischelemente 15 aufrecht stehend angeordnet sind. Diese bilden Förderschnecken mit einer jeweiligen Förderronde 16. Die Förder- und Mischelemente 15 sind über eine Gelenkwelle 1 mit dem nicht dargestellten Zapfwellenantrieb eines ankoppelbaren landwirtschaftlichen Schleppers verbunden.

Zwischen der Gelenkwelle 1 und dem vorgesehenen elektromotorischen Antrieb 3 ist eine schaltbare Kupplung 2 vorgesehen. Die als Hybridmischerrichtung bzw. die als Hybridfuttermischwagen in dem Ausführungsbeispiel gezeigt Vorrichtung kann daher auf zwei Arten angetrieben sein. Bei einem mobilen Betrieb der Vorrichtung kann diese von einem landwirtschaftlichen Schlepper gezogen und über den Schlepperzapfwellenantrieb angetrieben sein. In diesem Fall ist die schaltbare Kupplung 2 zwischen der Gelenkwelle 1 und dem Elektromotor 3 eingeschaltet und das Drehmoment wird über den nicht betätigten Elektromotor 3 auf den Antrieb des ersten Antriebes 6 des ersten Förder- und Mischelementes 15 und des Weiteren noch über die Antriebswelle 7 auf den Antrieb 8 des zweiten Förder- und Mischelementes 15 übertragen. Dazu ist eine Verbindungswelle 5 als Teil des Antriebsstrangs A vorgesehen, der eine zentrale Antriebswelle 9 aufweist, die den Elektromotor 3 zentral durchsetzt und einerseits von dem Elektromotor 3 angetrieben sein oder von dem nicht dargestellten Zapfwellenantrieb über die Gelenkwelle 1.

Die Absicherung der Vorrichtung vor einem zu hohen Drehmoment kann über eine Brechbolzensicherung erfolgen, die sich zwischen der Gelenkwelle 1 und der schaltbaren Kupplung 2 befindet. Im Falle einer Überlastung wird die Drehmomentenübertragung durch den Bruch des Bolzens unterbrochen.

Bei einem stationären Betrieb wird der Antrieb über den als Drehstrommotor ausgebildeten elektromotorischen Antrieb 3 und eine nicht im Einzelnen näher gezeigte elektronische Steuerung vorgenommen. Im stationären Betrieb wird die Vorrichtung mit dieser elektronischen Steuerung durch ein Kabel mit der elektrischen Energie versorgt. In diesem Falle wird die schaltbare Kupplung 2 ausgeschaltet. Die Gelenkwelle 1 wird in diesem Betriebszustand stillgesetzt.

Die weitere Drehmomentübertragung erfolgt durch den Elektromotor 3. Dieser weist die durchgehende Antriebswelle 9 auf. Bei dem Elektromotor 3 handelt es sich um einen vierpoligen oder sechspoligen Drehstrommotor für eine Anschlussspannung von 230/400 Volt oder 400/690 Volt und einer Antriebsdrehzahl von ca.
1.000 Umdrehungen pro Minute. Dieser Elektromotor 3 kann mittels eines Frequenzumrichters in seiner Drehzahl in einem sehr weiten Drehzahlbereich geregelt werden (50 bis 180 Hertz). Diese Möglichkeit erlaubt es, flexibel auf unterschiedliche Mischungskomponenten des Aufgabegutes als auch auf ein wechselndes Mischungsverhalten zu reagieren. Im fast entleerten Zustand kann der elektromotorische Antrieb 3 kurzzeitig auf eine hohe Drehzahl beschleunigt werden. Damit können die Misch- und Förderelemente 15 innerhalb des Futtermischwagenbehälters von Resten befreit werden. Dies vermindert das Risiko einer Kontamination von Resten mit einem nachfolgenden Aufgabegut.

Die Absicherung der Maschine im stationären Betrieb kann über eine elektrische Motorstrombegrenzung erfolgen. Diese kann Bestandteil des Frequenzumrichters und der elektronischen Steuerung sein. Im Falle der Überschreitung eines voreingestellten Wertes wird der elektromotorische Antrieb 3 ausgeschaltet.

Die erfindungsgemäße Vorrichtung stellt somit eine Kombination aus einer mobilen und einer stationären Maschine dar und kann sowohl mittels eines angekoppelten landwirtschaftlichen Schleppers über den Schlepperzapfwellenantrieb oder wahlweise über den elektromotorischen Antrieb 3 erfolgen. An beiden Enden der Verbindungswelle 5 ist im Übrigen noch eine kardanische Kupplung 2.1 und 2.2 vorgesehen.

## Patentansprüche

1. Vorrichtung (10) zum Mischen und Verteilen von Schüttgütern, insbesondere von kurz- und langfaserigem Silagegut, mit einem Behälter zur Aufnahme von Schüttgut, der zumindest ein in eine Rotationsbewegung versetzbares Förder- und Mischelement (15) aufweist, welches von einem mit einem Zapfwellenantrieb eines landwirtschaftlichen Schleppers koppelbaren Antriebsstrang (A) motorisch antreibbar ist, **dadurch gekennzeichnet, dass** der Antriebsstrang (A) in im Wesentlichen koaxialer Anordnung eine einen elektromotorischen Antrieb (3) durchsetzende Antriebswelle (9), eine mit der Antriebswelle (9) verbindbare Gelenkwelle (1) zur Kopplung mit dem Zapfwellenantrieb des landwirtschaftlichen Schleppers und eine mit dem Förder- und Mischelement (15) koppelbare Verbindungswelle (5) aufweist, wobei zwischen der Gelenkwelle (1) und der Antriebswelle (9) eine schaltbare Kupplung (2) vorgesehen ist.

2. Vorrichtung (10) nach Anspruch 1, **dadurch gekennzeichnet, dass** die Verbindungswelle (5) über eine doppelkardanische Kupplung (2.1, 2.2) mit dem Förder-und Mischelement (15) und mit der Antriebswelle (9) verbunden ist.

3. Vorrichtung (10) nach Anspruch 2, **dadurch gekennzeichnet, dass** zwischen der Antriebswelle (9) und der kardanischen Kupplung (2.1, 2.2) der Verbindungswelle (5) ein Planetengetriebe (4) vorgesehen ist.

4. Vorrichtung (10) nach einem der Ansprüche 1 bis 3, **dadurch gekennzeichnet, dass** der elektromotorische Antrieb (3) die Antriebswelle (9) aufweist.

5. Vorrichtung (10) nach einem der Ansprüche 1 bis 4, **dadurch gekennzeichnet, dass** der Elektromotor (3) ein vierpoliger oder sechspoliger Drehstrommotor für eine Anschlussspannung von 230/400 Volt oder 400/690 Volt ist und einer Antriebsdrehzahl von ca. 1.000 Umdrehungen pro Minute aufweist.

6. Vorrichtung (10) nach Anspruch 5, **dadurch gekennzeichnet, dass** der Elektromotor (3) über einen Frequenzumrichter in seiner Drehzahl über einen Drehzahlbereich von 50 bis 180 Hertz geregelt ist.

7. Vorrichtung (10) nach einem der vorhergehenden Ansprüche, **dadurch gekennzeichnet, dass** der die Antriebswelle (9), die Gelenkwelle (1) und die Verbindungswelle (5) aufweisende Antriebsstrang (A) zumindest eine Scherbolzen als Überlastsicherung aufweist.

8. Vorrichtung nach Anspruch 7, **dadurch gekennzeichnet, dass** die Überlastsicherung als Scherbolzen ausgebildet ist.

9. Vorrichtung (10) nach einem der vorhergehenden Ansprüche, **dadurch gekennzeichnet, dass** eine Vorrichtung zur Begrenzung der elektrischen Stromzuführung für den elektromotorischen Antrieb (3) vorgesehen ist.

10. Vorrichtung (10) nach Anspruch 6 und 9, **dadurch gekennzeichnet, dass** die Vorrichtung zur Begrenzung der elektrischen Stromzuführung Bestandteil des Frequenzumrichters ist.
